# EUROPEAN PATENT APPLICATION

(11) **EP 1 439 469 A1**
(43) Date of publication of application: **21.07.2004**
(21) Application number: 03000682.9
(22) Date of filing: 16.01.2003
(51) Int. Cl.: G06F 13/42

(54) **Building-block system framework for information appliance**

(71) Applicant: Pac Interactive Technology, Inc., Nei-Hu, Taipei (TW)
(72) Inventor: Liao, Cheng-Chi, Nei-Hu, Taipei (TW)
(74) Representative: Viering, Jentschura & Partner

(57) **Abstract**

A building-block system framework comprises a host device and a plurality of independently operable function devices, in which each device is provided with a conversion circuit (a codec and interface circuit, etc.) for converting signals into common standards (USB or IEEE1394, etc.), such that the signals can be transmitted to the host device and those function devices. The function devices could be a musical accompaniment, TV set, phonographic equipment (including an FM/AM receiver or amplifier), CD player, phone set, etc. The host device is supposed to run an indispensable operating software for controlling the function devices, by which a user could selectively operate the function devices according to the detection results showing whether a function device is existed or not. Since each function device is provided with a conversion circuit, signals can be transmitted in standard specifications, and no matter whichever a function device is added or deleted, the whole system can operate smoothly without being affected. Moreover, all the function devices can operate independently irrespective the operating state of the host device, no matter opened or closed.

## Description

### FIELD OF THE INVENTION

This invention relates generally to information appliances, more particularly, it relates to a building-block system framework for information appliance system.

### BACKGROUND OF THE INVENTION

Following to the development steps of human civilization, our society has already entered the industrial era, and further, the information age, from the agricultural. Since the time sequence has stepped into the 21st century, people seem to depend far deeper on information and request for higher and higher standards, thanking to the great progress made in technology of the Internet and wireless communications. Today, to connect with a network for immediate data fetching without being limited by time or distance, or for information exchange is almost an indispensable living style of one's daily life.

Conventionally, a computer is considered the best device for network connection, however, a general person would still think the computer a complicated machine to operate. Therefore, during the so-called late PC era, the information appliances are boomed to tell that people do need some more convenient and easier devices for network connection to thereby diversify the information contents and improve the fetching convenience of information. The new IA products have not yet been specifically defined for they are still undergoing unlimited evolution and expanding applicable scope thereof. When speaking in a broad-sense definition, every electronic product or device that can satisfy people with fast information service can be defined as an information appliance.

For reorganization and analysis of information on the other hand, the powerful operation capability of the computer is the key function that can facilitate people's works and studies. Subsequent to fast development of the network technology, the characters, voices, video signals, and images, etc., are gradually integrated for use in so-called 3C or merely 2C industries.

It is understandable that, irrespective of IA's shapes or patterns, the powerful operation capability of computer and the convenience of transmitting or fetching data through network are the key points that can satisfy people in this regard. A known IA usually comprises a host computer, including at least a computer which, at a broad sense, could be a data processing device with a hub of central processor, or a control device with a hub of microprocessor, and some other devices having different functions, such as a musical accompaniment, TV set (high-resolution TV or cable TV), FM or AM radio receiver, phonographic equipment, amplifier, CD player, etc., or even a communication device, such as a facsimile. That is to say to connect a variety of entertainment and/or communication peripherals directly to a host computer in order to make people enjoy controlling and operating those peripheral equipments.

Above combination manner that integrates various functions together to allow a user to select a part of or all functions freely at will is favorable for massive manufacture of standard products. However, on the other hand, such a disposition way would increase some unnecessary cost inevitably, namely, a user who doesn't need some of the functions is entailed an extra expense, or in other words, he cannot buy the peripherals optionally. This is obviously disadvantageous to a maker for cost decrement and market competition, and annoys him of wondering for provision of few customer orders at high cost.

### SUMMARY OF THE INVENTION

The primary objective of this invention is to provide a building-block system framework for information appliance system, in which a variety of peripherals can be selectively connected to a host computer to satisfy a user's respective demands.

Another objective of this invention is to provide a building-block system framework for information appliance system, which could be made in small amount at a low cost.

In order to realize abovesaid objectives, the building-block system framework of this invention should comprise a host device which is a control device presided by a central processing unit or a microprocessor, and a plurality of function devices, in which each device is provided with a specific function and a conversion circuit (a codec and interface circuit for example) for converting signals into common standards, such that the signals can be transmitted to the host device and those function devices. The mentioned function devices could be a musical accompaniment, TV set, phonographic equipment (including an FM/AM receiver, or amplifier), CD player, phone set, etc. The central processing unit in the host device is supposed to run a necessary operating system for controlling the function devices, by which a user could selectively operate the function devices according to the detection results showing whether a function device is existed or not. Now that each function device is provided with a conversion circuit, signals can be transmitted in standard specifications, and no matter whichever a function device is added or deleted, the whole system can operate smoothly without being affected. Moreover, all the function devices can operate independently irrespective the operating state of the host device, no matter opened or closed.

From another viewpoint of this invention, there are several connecting ports arranged on the host device which could be connectors according to protocol of the USB1.1 or USB2.0 or IEEE394 or bluetooth for selectively inserting the function devices onto the host device.

For more detailed information regarding advantages or features of this invention, at least an example of preferred embodiment will be fully described below with reference to the annexed drawings.

### BRIEF DESCRIPTION OF THE DRAWINGS

The related drawings in connection with the detailed description of this invention to be made later are described briefly as follows, in which:

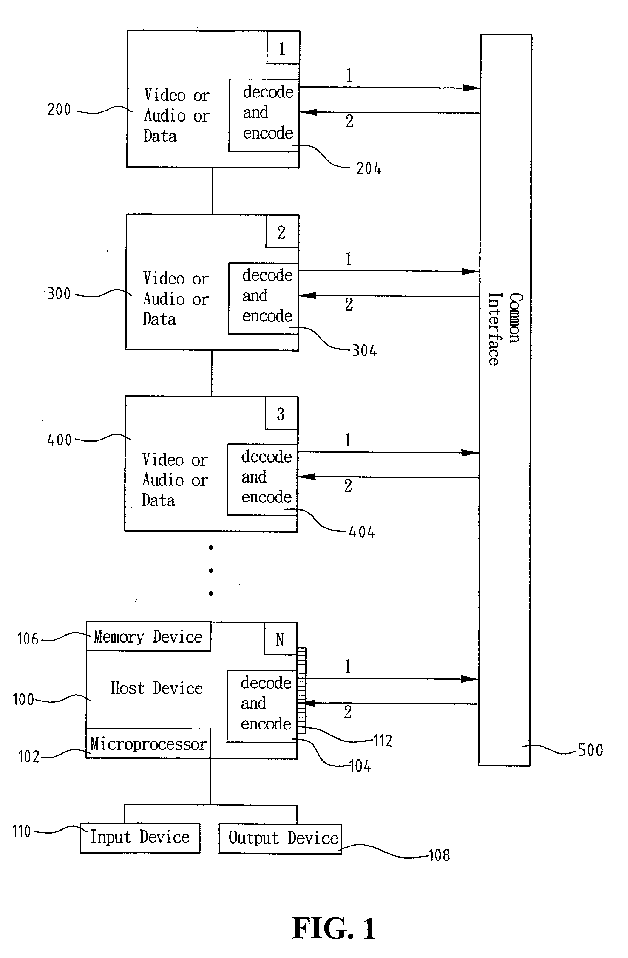

Fig. 1 shows a schematic block diagram of the IA configuration of this invention.

### DETAILED DESCRIPTION OF THE INVENTION

As shown in the only figure (Fig. 1), the system framework of this invention comprises a host device 100 including a control circuit having a hub microprocessor 102, and a conversion circuit 104 connected to and controlled by the control circuit 102 for receiving or transmitting signals. The host device 100 could have a PC framework composed of a memory device 106 for storing data, application software, and an operating system. Preferably, the host device 100 is provided with an output device 108, such as a display, for showing signals or messages to a user; and an input device 110, such as a cursor controller, for a user to input his commands.

The host device 100 could be connected to the Internet (not shown) via a proper connection means, which is already known in technology to the general network makers and hence ignored herein.

The framework of this invention further comprises several function device 200, 300, 400 which could be a musical accompaniment, TV set, phonographic equipments (including FM/AM receiver and amplifier), CD player, phone set, etc., or video/audio/digit processing device. According to this invention, each function device 200, 300, 400 has an inside conversion circuit 264, 304, 404 for receiving and transmitting signals and for converting the signals to be transmitted into a standard format for transmission to other function devices and the host device, also for converting received signals into a format that is acceptable to the related function device 200, 300, 400.

Those function devices 200, 300, 400 could be connected to a conversion circuit 104 of the host device 100 through a common interface device 500 for signal transmission among the function devices and the host device, in which the common interface device 500 could be any of the USB1.1, USB2.0, IEEE1394, or wireless protocol, such as Bluetooth, etc.

Multiple connection ports 112 might be provided to the host device 100 for connection with the common interface device 500, a USB connector for example, to allow a user to selectively plug therein required function devices 200, 300, 400. Or, there could be a unique port for connecting with a USB hub (not shown), which is connected to the function devices too.

In the event that at least a function device 200, 300, 400 is a TV set or other video display device, the output device 108 of the host device 100 could be the TV set too.

During operation, the state of those function devices can be displayed on the output device 108 by means of the software in the host device 100, which also provides a selection menu for easy choice and control of the function devices 200, 300, 400. The state shall include the function devices available in this system, and indicate which and which are already opened for operation. In other words, the software in the host device 100 can show all the available function devices 200, 300, 400 on the output device 108, and further their states, opened or closed, for example, to enable a user to control the function devices 200, 300, 400 through the input device 110 and the host device 100. Thus, by means of this framework, to freely increase or decrease the amount of the function device, namely, to add extra function devices to or remove some from the host device 100, is possible.

On the other hand, since all the function devices have been equipped with a conversion circuit 204, 304, 404 respectively, they can readily connect and transfer signals to each other through the common interface device 500, that is, some function device may operate bypass the host device 100. For instance, in the case a function device has included a CD player and amplifier, the CD player can output audio signals through the amplifier even when the host device 100 is closed. This merit in operation could be extended if necessary by adding an extra microprocessor, for example, to each conversion circuit 204, 304, 404 of each function device 200, 300, 400 so as to upgrade the capability of connection and communication among the function devices.

In the above described, at least one preferred embodiment has been described in detail with reference to the drawings annexed, and it is apparent that numerous changes or modifications may be made without departing from the true spirit and scope thereof, as set forth in the claims below.

## Claims

1. A building-block system framework for information appliances, comprising:
a host device having a microprocessor and a conversion circuit connected to and controlled by said microprocessor;
at least a function device provided with a specific function, having a conversion circuit; and
a common interface device for connecting the conversion circuit of said function device to the conversion circuit of said host device in order to selectively joint the function device to said host device for being controlled and operated by the microprocessor in said host device.

2. The framework according to claim 1, in which said common interface device includes the USB Communication Protocol.

3. The framework according to claim 1, in which said common interface device includes the IEEE1394 Communication Protocol.

4. The framework according to claim 1, in which the host device includes an operating software to enable a user to control said function device.

5. The framework according to claim 4, in which said host device further comprises an output device for the operating software to show the state of the function device to a user.

6. The framework according to claim 5, in which said host device further comprises an input device for a user to control the function device through the microprocessor and operating software.

7. The framework according to claim 1, which comprises two or more function devices connected together through said common interface device.

8. The framework according to claim 7, in which the conversion circuits in those function devices can transmit signals to each other irrespective of the operating state of the host device.

9. The framework according to claim 4, in which said host device further comprises a memory device for storing said operating software.

10. The framework according to claim 1, in which said host device is connected online to the Internet.
